# EUROPEAN PATENT APPLICATION

(11) **EP 3 923 046 A1**
(43) Date of publication of application: **15.12.2021**
(21) Application number: 21174848.8
(22) Date of filing: 19.05.2021
(51) Int. Cl.: G02B 6/122, G02B 6/124, G02F 1/29, G02F 1/295

(54) **MULTILAYER OPTICAL PHASED ARRAYS FOR SIDELOBE MITIGATION**

(30) Priority: 08.06.2020 US 202016896025
(71) Applicant: Honeywell International Inc., Charlotte, NC 28202 (US)
(72) Inventor: PUCKETT, Matthew Wade, Charlotte, 28202 (US); KRUEGER, Neil A., Charlotte, 28202 (US)
(74) Representative: Haseltine Lake Kempner LLP

(57) **Abstract**

An optical phased array comprises a first substrate layer, and a first device array on the first substrate layer. The first device array includes a first set of emitters and a first set of waveguides. Each waveguide in the first set of waveguides is respectively coupled to one of the emitters in the first set of emitters. A second substrate layer is over the first substrate layer in a stacked configuration, and a second device array is on the second substrate layer. The second device array includes a second set of emitters and a second set of waveguides. Each waveguide in the second set of waveguides is respectively coupled to one of the emitters in the second set of emitters. The second sets of emitters and waveguides are positioned on the second substrate to be offset with respect to the first sets of emitters and waveguides on the first substrate.

## Description

### BACKGROUND

Optical phased arrays (OPAs), which are used to steer the direction of emission of optical beams, are emerging as a critical component in several key technologies, including light detection and ranging (LiDAR) and remote sensing systems. While OPAs can be fabricated on integrated photonics chips, one of the shortcomings of current devices is that the physical separation between individual emitters in the OPAs is too large, leading to the generation of unwanted sidelobes in the far-field emission. These sidelobes can be problematic for a number of reasons, and it is therefore desirable to develop new OPA architectures which suppress or eliminate the sidelobes.

In many conventional devices, all of the emitters comprising the OPA typically exist on a single plane. This limits how closely the emitters may be placed with respect to each other, while avoiding optical cross-talk among the emitters.

### SUMMARY

An optical phased array comprises a first substrate layer, and a first device array on the first substrate layer, with the first device array including a first set of emitters and a first set of waveguides. Each waveguide in the first set of waveguides is respectively coupled to one of the emitters in the first set of emitters. A second substrate layer is over the first substrate layer in a stacked configuration, and a second device array is on the second substrate layer. The second device array includes a second set of emitters and a second set of waveguides. Each waveguide in the second set of waveguides is respectively coupled to one of the emitters in the second set of emitters. The second sets of emitters and waveguides are positioned on the second substrate to be offset with respect to the first sets of emitters and waveguides on the first substrate.

### DRAWINGS

Understanding that the drawings depict only exemplary embodiments and are not therefore to be considered limiting in scope, the exemplary embodiments will be described with additional specificity and detail through the use of the accompanying drawings, in which:
Figure 1 is a schematic orthogonal view of a multilayer optical phased array (OPA), according to one embodiment;
Figures 2A-2K are end views depicting an exemplary method of fabricating a multilayer OPA;
Figure 3 is a simulated far-field emission profile for the operation of a conventional single layer OPA; and
Figure 4 is a simulated far-field emission profile for the operation of a multilayer OPA.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

Multilayer optical phased arrays (OPAs) are described herein that provide sidelobe mitigation. The multilayer OPAs have a multilayer distribution of emitters, which effectively increases emitter density without adding crosstalk between optical channels.

In the present approach, the optical phased array (OPA) architecture is split among two or more planes having device layers. This architecture allows optical crosstalk to remain low, while reducing the lateral separation (i.e., pitch) among emitters of the OPA, thereby increasing the emitter density in a given area. The reduction in pitch mitigates or eliminates sidelobes in a far-field emission and simultaneously increases the power contained in the fundamental central lobe.

The multilayer OPAs can be fabricated through standard integrated photonics processes. In the design of the multilayer OPA, vertical transitions are included that carry optical power from an initial device layer into one or more upper device layers. Within each device layer, a sub-OPA is formed having a two-dimensional (2D) grid of emitters. The device layers are aligned relative to each other such that the layers act in combination as a single OPA. In addition, phase shifters can be co-fabricated with the optical architecture.

The present multilayer OPAs can be implemented in integrated photonics chips, light detection and ranging (LiDAR) systems, free-space optical communication systems, or the like.

The multiple sub-OPAs on separate device layers are aligned relative to each other in such a way to operate collectively as one beam-steering device. The effective emitter pitch can thereby be reduced, allowing for side lobes to be omitted from the far field emission. This increases the power contained in the main lobe and removes aliasing, which can be a problem in LiDAR applications.

To operate the multilayer OPA, laser light is injected from an input, and the phases of each of the OPA elements is controlled such as by using phase shifters. The light is coupled from the emitters into free space, and the beams emanating from all emitters overlap in the far field to generate a composite beam, which is steerable.

Further details of various embodiments are described hereafter with reference to the drawings.

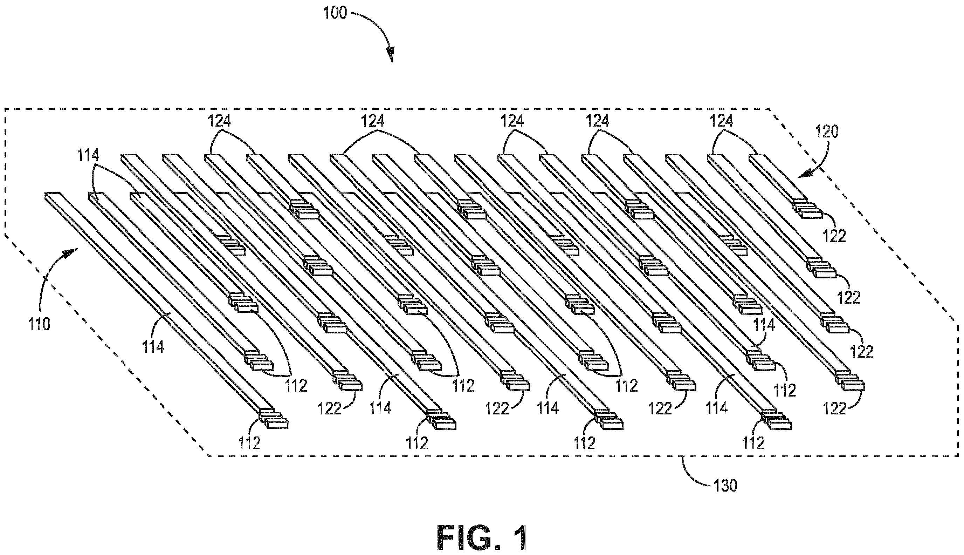

Figure 1 illustrates a multilayer OPA 100, according to one embodiment. The multilayer OPA 100 includes a first device array 110 on a first substrate layer, and a second device array 120 on a second substrate layer. The second device array 120 is over the first device array 110 in a stacked configuration.

The first device array 110 includes a first set of emitters 112 and a first set of waveguides 114. Each waveguide in the first set of waveguides 114 is respectively coupled to one of the emitters in the first set of emitters 112. In one embodiment, emitters 112 can be located in a staggered configuration with respect to each other on the first substrate layer, as shown in Figure 1.

The second device array 120 includes a second set of emitters 122 and a second set of waveguides 124. Each waveguide in the second set of waveguides 124 is respectively coupled to one of the emitters in the second set of emitters 122. In one embodiment, emitters 122 can be located in a staggered configuration with respect to each other on the second substrate layer, as shown in Figure 1.

The staggered configuration of emitters 112 and 122 on each substrate layer allows for distribution of the emitters in a 2D grid, as each emitter has a separate waveguide. This arrangement allows for easier routing of waveguides in the multilayer OPA.

In some embodiments, first device array 110 and a second device array 120 are surrounded by and embedded in a cladding structure 130. In these embodiments, the first and second substrate layers can be part of cladding structure 130.

The emitters 122 and waveguides 124 can be positioned on the second substrate layer to be in an offset alignment with respect to emitters 112 and waveguides 114 on the first substrate layer. In some embodiments, emitters 112 and 122 can include one or more grating structures, such as Bragg gratings.

The emitters 112, 122 and waveguides 114, 124 can be composed of various higher index optically transmissive materials. Examples of such materials include silicon, silicon nitride (SiNx), silicon carbide (SiC), diamond, silicon germanium (SiGe), germanium, gallium arsenide (GaAs), gallium nitride (GaN), gallium phosphide (GaP), lithium niobate (LiNbO₃), titanium dioxide (TiO₂), or combinations thereof.

The cladding structure 130 can be composed of various lower refractive index materials. Examples of such materials include silicon dioxide (SiO₂), silicon oxynitride (SiON), zinc oxide (ZnO) (used with Si waveguide or other similarly high index waveguide), aluminum oxide (Al₂O₃), calcium fluoride (CaF₂), or combinations thereof.

In other embodiments of the multilayer OPA, one or more additional substrate layers each with additional device arrays, can be formed over the second substrate layer and second device array 120 in a stacked configuration. The additional device arrays each include an additional sets of emitters and an additional set of waveguides, with each waveguide in the additional set of waveguides respectively coupled to one of the emitters in the additional set of emitters.

In alternative embodiments of the multilayer OPA, the emitters and waveguides on each device layer can be distributed around a perimeter. Examples of such emitter and waveguide configuration layouts is disclosed in U.S. Publication No. 2019/0331913 A1, entitled OPTICAL PHASED ARRAY BASED ON EMITTERS DISTRIBUTED AROUND PERIMETER, the disclosure of which is incorporated by reference herein. In the alternative embodiments, the emitter configuration layout on each device layer includes a plurality of emitters arranged around a perimeter such as to form a circular pattern, for example. The emitters in one device layer are offset with respect to the emitters in another device layer.

Various methods can be used to fabricate multilayer OPA 100, such as plasma enhanced chemical vapor deposition (PECVD), sputtering, low pressure CVD, atomic layer deposition, combinations thereof, or the like. In addition, OPA 100 can be fabricated as part of a standard process for fabricating an integrated photonics chip.

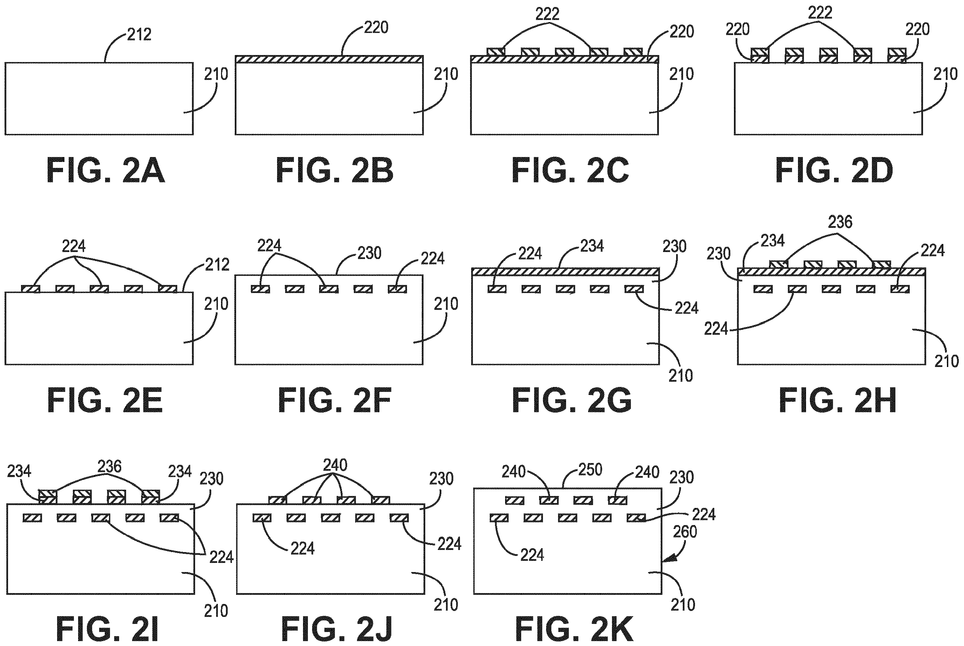

Figures 2A-2K depict an exemplary method of fabricating a multilayer OPA, such as multilayer OPA 100.

Fabrication of the multilayer OPA begins with providing a wafer substrate 210 having an upper surface 212, as shown in Figure 2A. The wafer substrate 210 can be formed of a first material that has a lower refractive index, such as silicon dioxide. Next, a first device layer 220 is formed by depositing a second material on upper surface 212 of wafer substrate 210, as shown in Figure 2B. The second material has a higher refractive index than the first material. For example, the second material can be silicon nitride, and can be deposited to have a thickness of about 50 nm to about 450 nm on a wafer such as silicon dioxide wafer.

As shown in Figure 2C, a first resist layer is formed over first device layer 220, and a first device pattern 222 is formed in the first resist layer, such as by standard lithography and development techniques. A first etch step is then performed, such as reactive ion etching, to remove excess material of first device layer 220 that is not under first device pattern 218, as illustrated in Figure 2D. Next, a first resist removal step is performed to remove the resist material of first device pattern 222, leaving a first device array 224, as depicted in Figure 2E. The first device array 224 is formed with a first set of emitters and a first set of waveguides, with each waveguide respectively coupled to one of the emitters.

As illustrated in Figure 2F, a first cladding layer 230 is then formed over first device array 224 and upper surface 212 of wafer substrate 210, such as by depositing the same first material as used for wafer substrate 210. The first cladding layer 230 can be formed such that its thickness is less than a free-space wavelength. For example, first cladding layer 230 can be formed by depositing a layer of silicon dioxide, and can have a thickness of about 100 nm to about 1,100 nm.

Thereafter, a second device layer 234 is formed by depositing the second material, having the higher refractive index, over first cladding layer 230, as shown in Figure 2G. For example, the second material can again be silicon nitride, and can be deposited to have a thickness of about 50 nm to about 450 nm such as on a silicon dioxide cladding layer.

As shown in Figure 2H, a second resist layer is formed over second device layer 234, and a second device pattern 236 is formed in the second resist layer, such as by standard lithography and development techniques. A second etch step is then performed, such as reactive ion etching, to remove excess material of second device layer 234 that is not under second device pattern 236, as illustrated in Figure 2I. Next, a second resist removal step is performed to remove the resist material of second device pattern 236, leaving a second device array 240, as depicted in Figure 2J. The second device array 240 is formed with a second set of emitters and a second set of waveguides, with each waveguide respectively coupled to one of the emitters. As shown in Figure 2J, second device array 240 is formed in an offset arrangement with respect to first device array 224.

Finally, an additional amount of the first material, such as silicon dioxide, is deposited over second device array 240 to form a second cladding layer 250, as depicted in Figure 2K. For example, second cladding layer 250 can be formed by depositing a layer, such as silicon dioxide, having a thickness of about 1,000 nm to about 10,000 nm. This results in a fabricated multilayer OPA 260. The multilayer OPA 260 is formed such that a far-field emission profile of light emitted by the first and second sets of emitters includes a central lobe, substantially without any sidelobes.

Although not shown, one or more additional layers, with respective sets of emitters and corresponding waveguides, can optionally be formed over second cladding layer 250, with additional cladding layers.

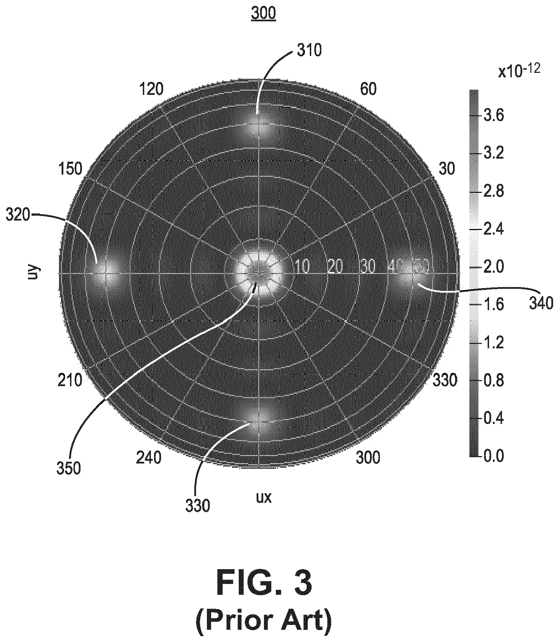

Figure 3 is a simulated far-field emission profile 300 for the operation of a conventional single layer OPA. As shown in Figure 3, four sidelobes 310, 320, 330, 340 are generated in the far-field emission, along with a central lobe 350, by the single layer OPA. As described previously, such sidelobes are unwanted in the far-field emission, and can be problematic for a number of reasons.

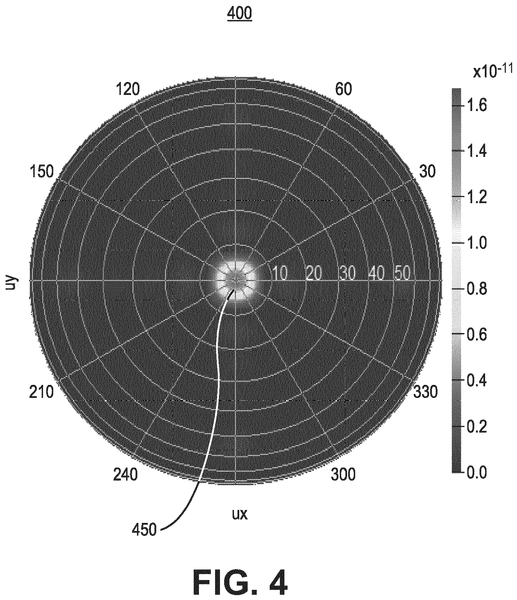

Figure 4 is a simulated far-field emission profile 400 for the operation of a multilayer OPA according to the present approach. As shown in Figure 4, sidelobes are not generated in the far-field emission by the multilayer OPA, but only a central lobe 450.

### Example Embodiments

Example 1 includes an optical phased array, comprising: a first substrate layer; a first device array on the first substrate layer, the first device array including a first set of emitters and a first set of waveguides, wherein each waveguide in the first set of waveguides is respectively coupled to one of the emitters in the first set of emitters; a second substrate layer over the first substrate layer in a stacked configuration; and a second device array on the second substrate layer, the second device array including a second set of emitters and a second set of waveguides, wherein each waveguide in the second set of waveguides is respectively coupled to one of the emitters in the second set of emitters; wherein the second sets of emitters and waveguides are positioned on the second substrate to be offset with respect to the first sets of emitters and waveguides on the first substrate.
Example 2 includes the optical phased array of Example 1, wherein the first set of emitters are located in a staggered configuration with respect to each other on the first substrate layer; and the second set of emitters are located in a staggered configuration with respect to each other on the second substrate layer.
Example 3 includes the optical phased array of any of Examples 1-2, wherein the first and second sets of emitters each comprise one or more grating structures.
Example 4 includes the optical phased array of Example 3, wherein the one or more grating structures comprise one or more Bragg gratings.
Example 5 includes the optical phased array of any of Examples 1-4, wherein the first and second sets of emitters and waveguides comprise a higher refractive index optically transmissive material.
Example 6 includes the optical phased array of any of Examples 1-5, wherein the first and second sets of emitters and waveguides comprise silicon, silicon nitride, silicon carbide, diamond, silicon germanium, germanium, gallium arsenide, gallium nitride, gallium phosphide, lithium niobate, titanium dioxide, or combinations thereof.
Example 7 includes the optical phased array of any of Examples 1-6, wherein the first and second sets of emitters and waveguides are embedded in a cladding layer.
Example 8 includes the optical phased array of Example 7, wherein the cladding layer comprises a lower refractive index material.
Example 9 includes the optical phased array of any of Examples 7-8, wherein the cladding layer comprises silicon dioxide, silicon oxynitride, zinc oxide, aluminum oxide, calcium fluoride, or combinations thereof.
Example 10 includes the optical phased array of any of Examples 1-9, further comprising: one or more additional substrate layers, each with additional device arrays, over the second substrate layer and the second device array in a stacked configuration; wherein the additional device arrays each include an additional set of emitters and an additional set of waveguides, each waveguide in the additional set of waveguides respectively coupled to one of the emitters in the additional set of emitters.
Example 11 includes the optical phased array of any of Examples 1-10, wherein the first and second sets of emitters are aligned relative to each other to operate collectively as a beam-steering device.
Example 12 includes the optical phased array of any of Examples 1-11, wherein a far-field emission profile of light emitted by the first and second sets of emitters includes a central lobe, substantially without any sidelobes.
Example 13 includes the optical phased array of any of Examples 1-12, wherein the first and second device arrays are implemented in an integrated photonics chip.
Example 14 includes the optical phased array of any of Examples 1-13, wherein the first and second device arrays are implemented in a light detection and ranging (LiDAR) system, or a free-space optical communication system.
Example 15 includes a method of fabricating an optical phased array, the method comprising: providing a wafer substrate having an upper surface, the wafer substrate formed of a first material having a first refractive index; forming a first device layer of a second material on the upper surface of the wafer substrate, the second material having a second refractive index that is higher than the first refractive index; removing portions of the second material from the first device layer to form a first device array, wherein the first device array is formed with a first set of emitters and a first set of waveguides, each waveguide in the first set of waveguides respectively coupled to one of the emitters in the first set of emitters; forming a first cladding layer of the first material over the first device array; forming a second device layer of the second material over the first cladding layer; removing portions of the second material from the second device layer to form a second device array, wherein the second device array is formed with a second set of emitters and a second set of waveguides, each waveguide in the second set of waveguides respectively coupled to one of the emitters in the second set of emitters; and forming a second cladding layer of the first material over the second device array; wherein the second sets of emitters and waveguides are formed to be offset with respect to the first sets of emitters and waveguides.
Example 16 includes the method of Example 15, wherein removing portions of the second material from the first device layer to form the first device array comprises: forming a first resist layer over the first device layer; forming a first device pattern in the first resist layer; removing portions of the second material from the first device layer that are not under the first device pattern; and removing resist material of the first device pattern to expose the first device array on the wafer substrate.
Example 17 includes the method of any of Examples 15-16, wherein removing portions of the second material from the second device layer to form the second device array comprises: forming a second resist layer over the second device layer; forming a second device pattern in the second resist layer; removing portions of the second material from the second device layer that are not under the second device pattern; and removing resist material of the second device pattern to expose the second device array on the first cladding layer.
Example 18 includes the method of any of Examples 15-17, wherein the first material comprises silicon dioxide, silicon oxynitride, zinc oxide, aluminum oxide, calcium fluoride, or combinations thereof; and the second material comprises silicon, silicon nitride, silicon carbide, diamond, silicon germanium, germanium, gallium arsenide, gallium nitride, gallium phosphide, lithium niobate, titanium dioxide, or combinations thereof.
Example 19 includes the method of any of Examples 15-18, wherein the first and second device layers are formed by a process comprising plasma enhanced chemical vapor deposition, sputtering, low pressure chemical vapor deposition, atomic layer deposition, or combinations thereof.
Example 20 includes the method of any of Examples 15-19, wherein the portions of the second material are removed from the first and second device layers by a process comprising a lithography-based procedure, followed by reactive ion etching.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. An optical phased array, comprising:
a first substrate layer;
a first device array on the first substrate layer, the first device array including a first set of emitters and a first set of waveguides, wherein each waveguide in the first set of waveguides is respectively coupled to one of the emitters in the first set of emitters;
a second substrate layer over the first substrate layer in a stacked configuration; and
a second device array on the second substrate layer, the second device array including a second set of emitters and a second set of waveguides, wherein each waveguide in the second set of waveguides is respectively coupled to one of the emitters in the second set of emitters;
wherein the second sets of emitters and waveguides are positioned on the second substrate to be offset with respect to the first sets of emitters and waveguides on the first substrate.

2. The optical phased array of claim 1, wherein:
the first set of emitters are located in a staggered configuration with respect to each other on the first substrate layer; and
the second set of emitters are located in a staggered configuration with respect to each other on the second substrate layer.

3. The optical phased array of claim 1, wherein the first and second sets of emitters each comprise one or more grating structures.

4. The optical phased array of claim 1, wherein the first and second sets of emitters and waveguides comprise a higher refractive index optically transmissive material.

5. The optical phased array of claim 1, wherein the first and second sets of emitters and waveguides are embedded in a cladding layer, wherein the cladding layer comprises a lower refractive index material.

6. The optical phased array of claim 1, further comprising:
one or more additional substrate layers, each with additional device arrays, over the second substrate layer and the second device array in a stacked configuration;
wherein the additional device arrays each include an additional set of emitters and an additional set of waveguides, each waveguide in the additional set of waveguides respectively coupled to one of the emitters in the additional set of emitters.

7. The optical phased array of claim 1, wherein the first and second sets of emitters are aligned relative to each other to operate collectively as a beam-steering device.

8. The optical phased array of claim 1, wherein the first and second device arrays are implemented in an integrated photonics chip.

9. The optical phased array of claim 1, wherein the first and second device arrays are implemented in a light detection and ranging (LiDAR) system, or a free-space optical communication system.

10. A method of fabricating an optical phased array, the method comprising:
providing a wafer substrate having an upper surface, the wafer substrate formed of a first material having a first refractive index;
forming a first device layer of a second material on the upper surface of the wafer substrate, the second material having a second refractive index that is higher than the first refractive index;
removing portions of the second material from the first device layer to form a first device array, wherein the first device array is formed with a first set of emitters and a first set of waveguides, each waveguide in the first set of waveguides respectively coupled to one of the emitters in the first set of emitters;
forming a first cladding layer of the first material over the first device array;
forming a second device layer of the second material over the first cladding layer;
removing portions of the second material from the second device layer to form a second device array, wherein the second device array is formed with a second set of emitters and a second set of waveguides, each waveguide in the second set of waveguides respectively coupled to one of the emitters in the second set of emitters; and
forming a second cladding layer of the first material over the second device array;
wherein the second sets of emitters and waveguides are formed to be offset with respect to the first sets of emitters and waveguides.
